# FASCICULE DE BREVET EUROPEEN

(11) **EP 3 515 761 B1**
(45) Date de publication et mention de la délivrance du brevet: **29.07.2020**
(21) Numéro de dépôt: 17783923.0
(22) Date de dépôt: 20.09.2017
(51) Int. Cl.: B60R 1/08, B60J 3/06

(54) **ELEMENT DE VISION FILTRANT FORMANT PARE-BRISE OU RÉTROVISEUR POUR VÉHICULE ROUTIER**
FILTRIERENDES ANSICHTSELEMENT MIT FORMUNG EINER VORDEREN ODER HINTEREN WINDSCHUTZSCHEIBE EINES STRASSENFAHRZEUGS
FILTERING VIEWING ELEMENT FORMING A FRONT OR REAR WINDSHIELD OF A ROAD VEHICLE

(30) Priorité: 20.09.2016 FR 1601369
(43) Date de publication de la demande: 31.07.2019
(73) Titulaire: Office National d'Etudes et de Recherches Aérospatiales, 91120 Palaiseau (FR)
(72) Inventeur: HAÏDAR, Riad, 75012 Paris (FR); MAINE, Sylvain, 75013 Paris (FR); VINCENT, Gregory, 9130 Massy (FR); PRIMOT, Jérôme, 92320 Chatillon (FR); LACHAUD, Hervé, 92350 Le Plessis Robinson (FR)
(74) Mandataire: Plasseraud IP
(86) Numéro de dépôt international: PCT/FR2017/052523
(87) Numéro de publication internationale: WO 2018/055290

(56) Documents cités:
- EP-A1- 2 161 123
- EP-A2- 1 334 869
- FR-A- 1 556 208
- GB-A- 926 176
- JP-A- 2011 145 331
- US-A- 3 026 763

## Description

La présente invention concerne un élément de vision filtrant formant pare-brise ou rétroviseur pour véhicule routier, ainsi qu'un procédé pour améliorer une vision d'un conducteur du véhicule.

Il est connu, notamment du document WO 2006/101712, d'utiliser un élément de vision filtrant pour former un pare-brise ou un rétroviseur d'un véhicule routier sur lequel cet élément est monté. L'élément est alors adapté pour filtrer un rayonnement incident qui participe à la vision d'un conducteur du véhicule, en fonction d'une orientation de la polarisation linéaire de ce rayonnement. Un élément de vision filtrant formant pare-brise pour véhicule routier est également divulgué dans le document US 3 026 763 A.

Dans la présente description, la direction de polarisation d'un rayonnement est la direction selon laquelle le champ électrique du rayonnement est orienté. En outre, on entend par filtrage d'un rayonnement en fonction de sa polarisation, par rapport à une direction de filtrage fixée, une sélection d'une composante de ce rayonnement pour laquelle la direction de polarisation est parallèle à la direction de filtrage, en vue d'une utilisation, d'une perception visuelle ou d'une détection de cette composante. La composante complémentaire du rayonnement pour laquelle la direction de polarisation est perpendiculaire à la direction de filtrage, est supprimée totalement ou atténuée dans une mesure supérieure à celle de la composante sélectionnée.

Il est aussi connu qu'une réflexion d'un rayonnement par une surface dioptrique ou absorbante, modifie la polarisation de ce rayonnement. Lors de la réflexion, l'intensité relative est augmentée pour la composante du rayonnement qui possède une polarisation linéaire parallèle à la surface réfléchissante, par rapport à la composante du rayonnement qui possède une polarisation linéaire contenue dans un plan perpendiculaire à la surface réfléchissante. Lorsque la surface réfléchissante est une interface entre deux milieux transparents, la réflexion produit un filtrage de polarisation qui est total pour la valeur de Brewster de l'angle d'incidence du rayonnement sur la surface : le rayonnement réfléchi est complètement polarisé parallèlement à la surface réfléchissante. Cet effet de polarisation existe encore, quoique dans une mesure réduite mais qui reste significative, lorsque la surface réfléchissante est aussi absorbante, et lorsque l'angle d'incidence du rayonnement est différent de la valeur de Brewster.

Pour ces raisons, la lumière qui est produite par les phares ou par des éléments de signalisation lumineuse d'un véhicule, et qui est réfléchie sur la surface d'une route ou d'une chaussée, est principalement polarisée linéairement et horizontalement. En outre, cette lumière qui est réfléchie par la route est plus intense lorsque la route est mouillée.

Dans la pratique, la hauteur angulaire d'éclairement des phares des véhicules qui circulent sur une route est ajustée pour éviter que cette lumière parvienne directement aux yeux d'un conducteur d'un autre véhicule. Ainsi, le conducteur n'est pas ébloui par la lumière directe qui est émise par les phares des autres véhicules. Mais la partie de cette lumière qui est émise en direction de la surface de la route, et qui est réfléchie par celle-ci en direction des yeux du conducteur, peut elle-même éblouir ou gêner le conducteur, surtout en condition nocturne de conduite et par temps de pluie. Cet éblouissement ou gêne visuelle est d'autant plus important(e) que la rugosité de la route produit un étalement de la tache lumineuse de réflexion qui est perçue par le conducteur.

Dans ces conditions, un but de la présente invention est d'améliorer la vision du conducteur, notamment par rapport à son confort visuel, et de réduire le risque d'éblouissement. De façon générale, l'invention vise à améliorer la sécurité de conduite automobile, en relation avec la vision du conducteur.

Pour atteindre ce but ou d'autres, la présente invention propose un nouvel élément de vision filtrant qui forme pare-brise ou rétroviseur pour un véhicule routier sur lequel l'élément est monté. Cet élément est adapté dans une partie au moins de sa surface de vision, appelée partie filtrante, pour transmettre ou réfléchir vers un conducteur du véhicule un rayonnement qui possède à l'extérieur du véhicule, avant d'atteindre la surface de vision, une polarisation linéaire parallèle à une direction de filtrage fixe par rapport à l'élément, avec une atténuation inférieure en comparaison avec un autre rayonnement qui possède à l'extérieur du véhicule une polarisation linéaire contenue dans un plan perpendiculaire à la direction de filtrage.

Selon une première caractéristique de l'invention, la surface de vision comprend une zone inférieure et une zone supérieure qui est située plus haut que la zone inférieure par rapport au véhicule et à une position de montage de l'élément de vision filtrant dans le véhicule, et la partie filtrante qui est ainsi nommée ci-dessus correspond soit à la zone inférieure soit à la zone supérieure.

Selon une seconde caractéristique de l'invention, l'autre parmi la zone inférieure et la zone supérieure, qui ne correspond pas à la partie filtrante, est adaptée pour transmettre ou réfléchir vers le conducteur les deux rayonnements qui ont à l'extérieur du véhicule, avant d'atteindre la surface de vision, les polarisations linéaires respectives parallèle à la direction de filtrage et contenue dans un plan perpendiculaire à la direction de filtrage, de sorte qu'une différence d'atténuation entre ces polarisations linéaires ait des valeurs distinctes dans les zones inférieure et supérieure.

Par sa capacité à filtrer le rayonnement de façon différente dans les zones inférieure et supérieure de la surface de vision, l'élément de vision selon l'invention peut améliorer le confort visuel du conducteur, d'une façon qui est optimisée différemment pour chacune des zones.

Dans des premiers modes de réalisation de l'invention, la zone inférieure de la surface de vision peut être adaptée pour transmettre ou réfléchir vers le conducteur un rayonnement qui possède à l'extérieur du véhicule, avant d'atteindre la surface de vision, une polarisation linéaire horizontale avec une atténuation supérieure en comparaison avec un rayonnement qui possède à l'extérieur du véhicule une polarisation linéaire qui est contenue dans un plan vertical. Les directions horizontale et verticale sont repérées par rapport au véhicule et à la position de montage de l'élément de vision filtrant dans ce véhicule. L'élément de vision atténue ainsi, dans sa zone inférieure, la lumière des phares d'autres véhicules qui est réfléchie par la route en direction des yeux du conducteur. L'éblouissement et la gêne visuelle que pourrait causer cette lumière qui est réfléchie par la route sont ainsi supprimés ou réduits.

En outre pour ces premiers modes de réalisation, la zone supérieure de la surface de vision peut être adaptée pour transmettre ou réfléchir vers le conducteur le rayonnement qui possède à l'extérieur du véhicule, avant d'atteindre la surface de vision, la polarisation linéaire horizontale avec une atténuation inférieure en comparaison avec le rayonnement qui possède à l'extérieur du véhicule la polarisation linéaire contenue dans le plan vertical. Il est ainsi possible de maintenir une vision dans la zone supérieure, qui ne soit pas perturbée ou réduite inutilement par une atténuation qui serait identique à celle produite dans la zone inférieure.

Dans des seconds modes de réalisation de l'invention, la zone inférieure de la surface de vision peut être adaptée pour transmettre ou réfléchir vers le conducteur le rayonnement qui possède à l'extérieur du véhicule, avant d'atteindre la surface de vision, la polarisation linéaire horizontale avec une atténuation inférieure en comparaison avec le rayonnement qui possède à l'extérieur du véhicule la polarisation linéaire contenue dans le plan vertical. L'élément de vision filtrant renforce alors la visibilité d'un premier véhicule externe dont la lumière des phares ou de signalisation lumineuse comporterait une composante polarisée horizontalement, par rapport à un second véhicule externe dont la lumière des phares ou de signalisation lumineuse serait polarisée verticalement. En effet, la zone inférieure de la surface de vision permet au conducteur de percevoir la lumière qui est produite par le premier véhicule puis réfléchie sur la route, alors que la route réfléchit dans une moindre mesure la lumière produite par le second véhicule.

En outre pour ces seconds modes de réalisation, la zone supérieure de la surface de vision peut être adaptée pour transmettre ou réfléchir vers le conducteur le rayonnement qui possède à l'extérieur du véhicule, avant d'atteindre la surface de vision, la polarisation linéaire horizontale avec une atténuation supérieure en comparaison avec le rayonnement qui possède à l'extérieur du véhicule la polarisation linéaire contenue dans le plan vertical. La zone supérieure de la surface de vision participe alors aussi à renforcer la différence de perception visuelle entre les premier et second véhicules externes, pour le conducteur.

De façon générale, un élément de vision filtrant conforme à l'invention peut comprendre au moins un polariseur linéaire qui est efficace dans l'une des zones inférieure ou supérieure de la surface de vision, pour produire la valeur de la différence d'atténuation entre les polarisations linéaires pour cette zone.

De façon générale aussi, une limite entre les zones inférieure et supérieure de la surface de vision ou une zone intermédiaire entre ces zones inférieure et supérieure, peut être située entre un dixième et une moitié d'une dimension de la surface de vision dans un plan vertical par rapport au véhicule et à la position de montage de l'élément de vision filtrant dans le véhicule. Pour cela, le dixième et la moitié de la dimension sont comptés à partir d'un bord inférieur de la surface de vision. Préférentiellement, la limite entre les zones inférieure et supérieure ou la zone intermédiaire peut être située en dessous d'un tiers de la dimension de la surface de vision dans le plan vertical, à partir du bord inférieur.

L'invention propose aussi un procédé pour améliorer une vision d'un conducteur d'un véhicule routier, suivant lequel le véhicule est équipé d'un élément de vision filtrant tel que décrit précédemment.

Avantageusement, l'élément de vision filtrant peut être ajusté en hauteur ou en inclinaison, par rapport au véhicule et à la position de montage de l'élément de vision filtrant dans le véhicule, de sorte qu'une limite entre les zones inférieure et supérieure de la surface de vision ou une zone intermédiaire entre ces zones inférieure et supérieure, soit superposée en hauteur angulaire pour la vision du conducteur, à un niveau apparent d'un contact entre une chaussée sur laquelle est située le véhicule et des roues d'un véhicule externe aussi situé sur la chaussée mais en avant ou en arrière du véhicule. L'écart de hauteur angulaire peut être inférieur ou égal à 10° (degré), de préférence inférieur à 5°, en valeur absolue, lorsque les deux véhicules sont distants entre eux de 40 m (mètre).

Le procédé de l'invention peut devenir particulièrement avantageux s'il comprend en outre que des véhicules externes au véhicule dans lequel est monté l'élément de vision filtrant, soient équipés d'ensembles respectifs d'éclairage et de signalisation lumineuse qui produisent une lumière soit avec une polarisation linéaire contenue dans un plan vertical lorsque ce véhicule externe est un véhicule à plus de deux roues, soit avec une polarisation linéaire horizontale ou naturelle lorsque le véhicule externe est un véhicule à deux roues. En effet, le véhicule externe apparaît alors différemment en condition nocturne de conduite pour le conducteur selon que ce véhicule externe est un véhicule à deux roues ou à plus de deux roues. Notamment, le véhicule à deux roues peut apparaître pour le conducteur avec plus d'intensité lumineuse totale dans la surface de vision de l'élément de vision filtrant.

D'autres particularités et avantages de la présente invention apparaîtront dans la description ci-après d'exemples de réalisation non limitatifs, en référence aux dessins annexés, dans lesquels :
- les Figures 1a et 1b représentent deux éléments de vision filtrants conformes à l'invention ;
- la Figure 2 montre des positions relatives de deux véhicules routiers, dont l'un est équipé d'un élément de vision filtrant conforme à la Figure 1a ;
- la Figure 3 illustre un fonctionnement d'un premier élément de vision filtrant selon l'invention ;
- les Figures 4a et 4b correspondent à la Figure 3 pour un second élément de vision filtrant selon l'invention ; et
- la Figure 5 illustre un avantage supplémentaire d'un élément de vision filtrant selon l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

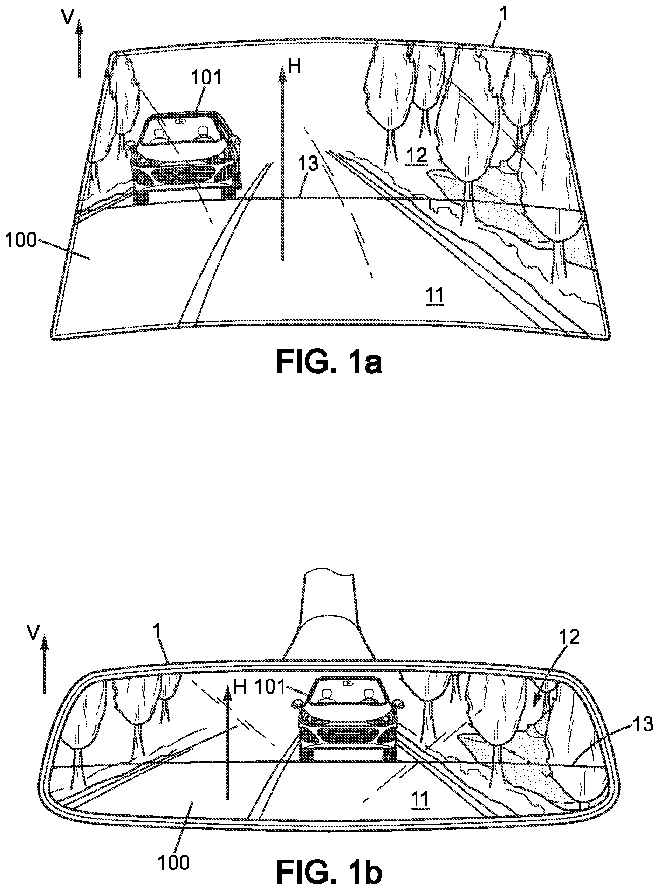

Conformément aux Figures 1a et 1b, un élément de vision pour véhicule routier, qui est référencé globalement 1, peut être un pare-brise (Figure 1a) ou un rétroviseur (Figure 1b). Bien que la forme du rétroviseur qui est représenté sur la Figure 1b corresponde à un rétroviseur intérieur, c'est-à-dire destiné à être monté dans le véhicule à l'intérieur de l'habitacle, ce peut être alternativement un rétroviseur externe, destiné à être monté sur le coté droit ou gauche de la carrosserie du véhicule. L'élément de vision 1 possède une surface de vision dans laquelle le conducteur du véhicule peut regarder une partie de l'environnement extérieur du véhicule. Pour le pare-brise de la Figure 1a, la surface de vision correspond en général à la totalité de la feuille de verre, à l'exclusion de parties sérigraphiées ou utilisées pour l'accrochage du rétroviseur intérieur. Pour un rétroviseur, la surface de vision correspond en général à la totalité de la surface du miroir. Dans tous les cas, l'élément de vision possède une orientation de montage par rapport au véhicule, de sorte que la direction verticale V puisse être rapportée à l'élément de vision 1. Typiquement, la direction V est perpendiculaire à la surface d'une route 100 sur laquelle circule le véhicule sur lequel est monté l'élément de vision 1.

La direction H est une direction de hauteur attachée à et parallèle à l'élément de vision 1 : elle est définie comme l'intersection de la surface de vision de l'élément 1 avec un plan qui est orienté verticalement par rapport au véhicule. Elle est orientée vers le haut, pour une position normale du véhicule sur la route.

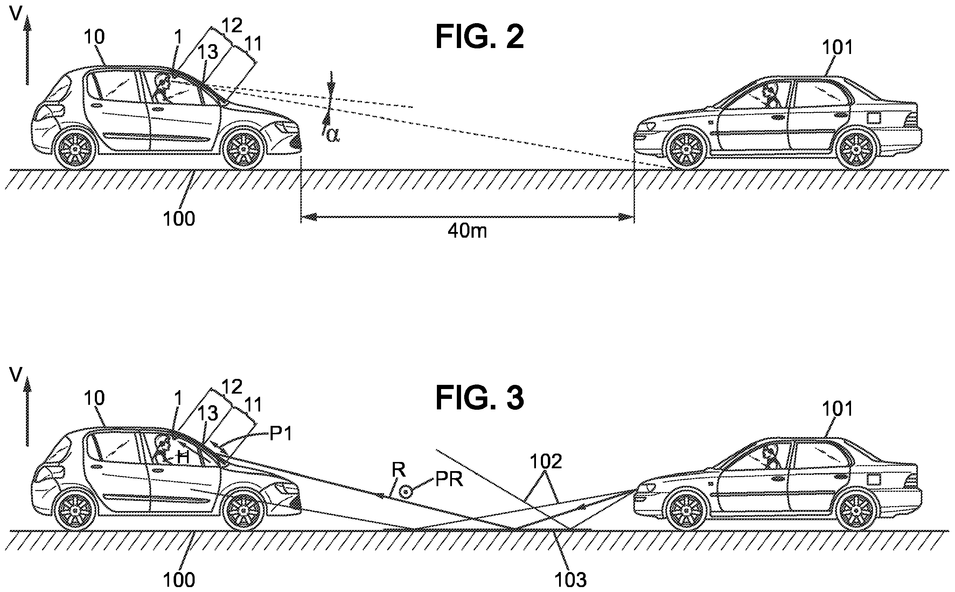

Dans les Figures 2 à 5, la référence 10 désigne le véhicule sur lequel est monté l'élément de vision 1 conforme à l'invention.

Pour l'invention, la surface de vision de l'élément 1 est divisée en au moins deux parties qui sont superposées selon la direction H : une zone inférieure 11 et une zone supérieure 12. Les deux zones peuvent être juxtaposées avec une limite intermédiaire commune 13 qui est sensiblement horizontale. Alternativement, une zone intermédiaire (non représentée) peut être intercalée entre les zones 11 et 12, par exemple sous forme d'une bande intermédiaire qui est sensiblement horizontale.

La limite 13 est située en hauteur dans la surface de vision de l'élément 1 de façon qu'elle apparaisse pour le conducteur du véhicule 10 sensiblement au niveau du contact entre la route 100 et les pneus d'un autre véhicule 101 qui circule sur la même route 100 que le véhicule 10. Dans le cas du pare-brise (Figure 1a), cette hauteur de la limite 13 selon la direction V peut être déterminée pour la position standard du conducteur telle que définie par la norme ISO 4513. Pour un rétroviseur (Figure 1b), la hauteur apparente du véhicule 101, situé en arrière du véhicule 10, par rapport à la ligne 13 peut être ajustée en modifiant l'inclinaison du rétroviseur autour d'un axe horizontal. De façon générale et comme illustré par la Figure 2, la ligne 13 est avantageusement située de façon à apparaître pour le conducteur du véhicule 10 avec un écart angulaire α dans un plan vertical qui est inférieur à 10° (degré) par rapport à une ligne de contact entre les pneus du véhicule 101 et la route 100, lorsque le véhicule 101 est à 40 m (mètre) en avant ou en arrière du véhicule 10. Préférablement, l'écart α peut être inférieur à 5°. Une telle position de la limite 13 peut être située entre un dixième et la moitié d'une dimension de la surface de vision de l'élément 1 selon la direction de hauteur H, comptée à partir du bord inférieur de l'élément 1.

Selon, l'invention les deux zones 11 et 12 sont pourvues de pouvoirs polarisants qui sont différents. Pour cela, l'élément 1 peut être muni de deux structures polarisantes, une dans chacune des zones 11 et 12, si bien que chaque zone transmet en direction des yeux du conducteur du véhicule 10, une partie de la lumière incidente avec une répartition d'intensité qui est modifiée entre deux polarisations linéaires perpendiculaires. Dans des modes de réalisation simples de l'invention, une telle structure polarisante peut être un film polariseur qui recouvre la zone concernée de la surface de vision de l'élément 1. De façon connue, un tel film polariseur peut être constitué à partir de molécules dichroïques qui sont orientées selon une direction déterminée, parallèle au film lui-même. Par exemple, le film peut être à base d'alcool polyvinylique, ou PVA, formant matrice pour des molécules dichroïques, telles que des molécules d'iode. Le film est étiré uniaxialement de façon à orienter les molécules dichroïques, puis appliqué sur la surface de vision de l'élément 1 dans la zone désirée, inférieure 11 ou supérieure 12. L'orientation du film parallèlement à la surface de vision est alors définie par l'angle entre la direction d'étirement du film polariseur et la direction de hauteur H à l'intérieur de la surface de vision de l'élément 1. Dans la suite, on appelle direction de polarisation de la structure polarisante, la direction de polarisation linéaire d'un rayonnement incident qui est retransmis par l'élément 1 en direction des yeux du conducteur sans modifier sa polarisation et avec une efficacité maximale de retransmission. La direction de polarisation qui est ainsi définie est perpendiculaire à celle de la polarisation linéaire d'un rayonnement qui est absorbé dans une proportion maximale par la structure polarisante, lorsque la polarisation du rayonnement est elle-même variée progressivement autour de la direction de propagation. Lorsque l'élément 1 est un pare-brise, le rayonnement est retransmis par transparence sans modification significative de sa direction de propagation. Alternativement, lorsque l'élément 1 est un rétroviseur, le rayonnement est retransmis par réflexion.

Conformément à la Figure 3, les deux véhicules 10 et 101 circulent en direction l'un de l'autre sur la route 100, par exemple en condition nocturne. Les phares du véhicule 101 sont allumés, de sorte qu'ils projettent un faisceau lumineux 102 en direction de la surface de la route 100, en avant du véhicule 101. La surface de la route 100 réfléchit le faisceau 102, partiellement en direction du véhicule 10. La référence R désigne un rayon lumineux à l'intérieur du faisceau 102, qui est ainsi réfléchi en direction des yeux du conducteur du véhicule 10. De façon connue, le faisceau 102 présente, après sa réflexion sur la route 100, une polarisation linéaire qui est principalement orientée parallèlement à la surface de la route. Cette orientation de polarisation est symbolisée sur la Figure 3 par un rond pointé en son centre, et référencé PR. Cet effet polarisant de la surface de la route 100 correspond en partie à l'effet Brewster. Il est accentué lorsque la route est mouillée. A cause de cette réflexion, le conducteur du véhicule 10 perçoit une tache lumineuse 103 sur la route 100, en avant du véhicule 101, qui peut être éblouissante. Cette tache de lumière réfléchie 103 est parfois appelée flaque lumineuse. Elle est d'autant plus étendue sur la route 100, que la surface de la route est plus rugueuse ou plus granuleuse.

Un objectif de l'invention consiste à supprimer ou réduire l'éblouissement qui est ainsi provoqué pour le conducteur du véhicule 10. Pour cela, selon un premier mode de réalisation de l'invention, le pare-brise 1 peut être muni dans sa zone inférieure 11 d'un film polariseur dont la direction de polarisation est parallèle à la direction de hauteur H, conformément à la flèche double qui est indiquée à proximité de la zone 11 du pare-brise 1, et référencée P1. De cette façon, le film polariseur absorbe la partie du faisceau 102 qui est réfléchie en direction du conducteur du véhicule 10, si bien que ce conducteur ne voit plus la flaque lumineuse 103 en avant du véhicule 101.

Simultanément, encore en référence à la figure 3, la zone supérieure 12 peut être munie d'un film polariseur dont la direction de polarisation est horizontale, afin que les deux zones 11 et 12 présentent des valeurs identiques du coefficient de transmission lumineuse d'un rayonnement qui est polarisé naturellement. La limite 13 est alors invisible en dehors du faisceau 102. On entend par rayonnement à polarisation naturelle un rayonnement dont l'énergie est répartie à égalité entre deux directions de polarisation qui sont perpendiculaires entre elles, notamment une répartition d'énergie à égalité entre la polarisation horizontale et une direction de polarisation qui est contenue dans un plan vertical.

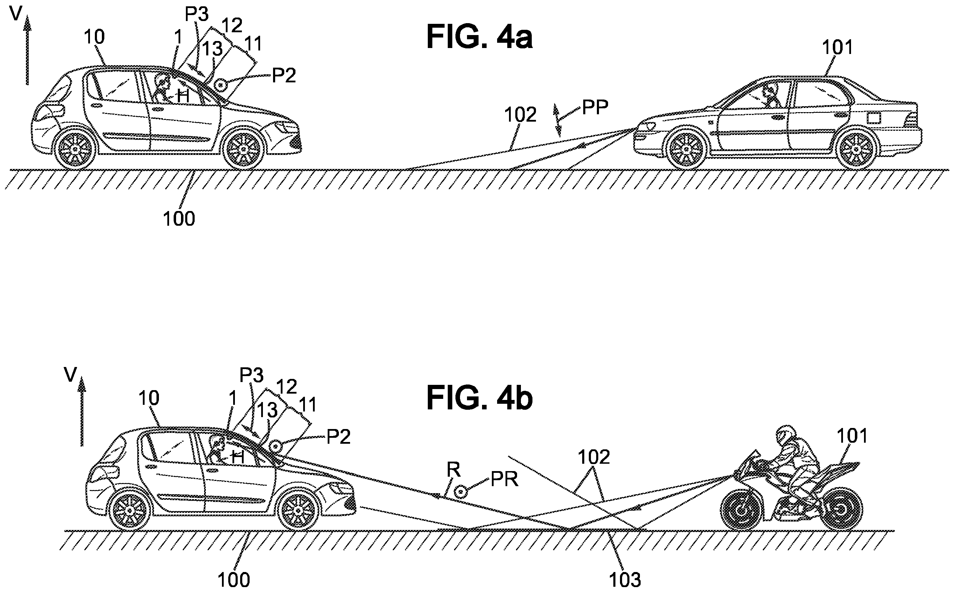

La Figure 4a reprend encore la situation de conduite de la Figure 3 avec les deux véhicules 10 et 101. Le véhicule 10 est équipé d'un pare-brise 1 qui est conforme à un second mode de réalisation de l'invention.

Selon un autre aspect de la présente invention, la lumière qui est produite par les phares du véhicule 101 est polarisée linéairement dans un plan vertical, lorsque le véhicule 101 est à plus de deux roues, par exemple lorsqu'il s'agit d'un véhicule à quatre roues ou d'un camion à plus de quatre roues. La flèche double qui est référencée PP dans la Figure 4a indique cette polarisation. Une telle polarisation peut être produite par des polariseurs qui sont disposés à la sortie des optiques des phares du véhicule 101, ou bien la lumière peut être produite directement avec une telle polarisation linéaire par la source lumineuse des phares. Le faisceau des phares du véhicule 101 est alors réfléchi avec une intensité nulle, ou faible, par la surface de la route 100. Le conducteur du véhicule 10 ne voit donc pas de flaque lumineuse en avant du véhicule 101, ou bien il perçoit une tache lumineuse de faible intensité.

La Figure 4b correspond à la Figure 4a, lorsque le véhicule 101 est à deux roues, notamment du type motocycle. Dans ce cas, la lumière qui est produite par le ou les phare(s) du véhicule 101 peut être polarisée horizontalement ou naturellement. Dans ces deux cas, la lumière du faisceau 102 en provenance du motocycle est polarisée horizontalement après réflexion sur la surface de la route 100, comme pour la situation de la Figure 3.

Pour le second mode de réalisation de l'invention, la zone inférieure 11 du pare-brise 1 du véhicule 10 peut être munie d'un film polariseur dont la direction de polarisation est horizontale. La référence P2 désigne le symbole de la direction de polarisation horizontale du polariseur qui est intégré au pare-brise 1 dans la zone inférieure 11. Le conducteur du véhicule 10 ne perçoit alors pas de flaque lumineuse lorsque le véhicule 101 est du type à plus de deux roues (Figure 4a), mais perçoit la flaque lumineuse 103 lorsque le véhicule 101 est du type à deux roues (Figure 4b). Son attention visuelle est donc attirée plus fortement dans ce dernier cas.

Simultanément, encore en référence aux figures 4a et 4b, la zone supérieure 12 peut être munie d'un film polariseur dont la direction de polarisation est parallèle à la direction de hauteur H. Cette direction de polarisation est désignée par la référence P3. De cette façon, la limite 13 entre les zones 11 et 12 peut être de nouveau invisible pour les objets externes au véhicule 10 qui émettent ou réfléchissent une lumière qui est polarisée naturellement en direction des yeux du conducteur.

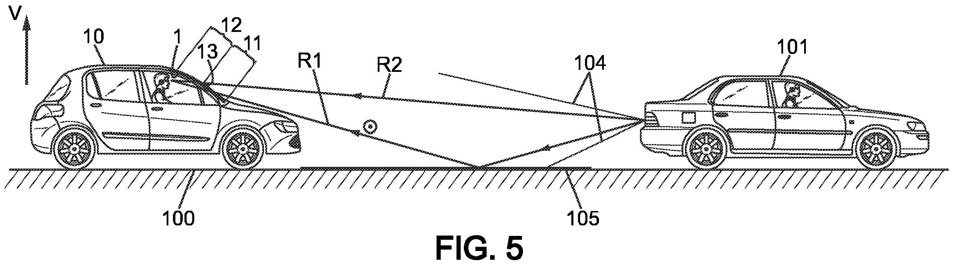

La Figure 5 illustre une situation dans laquelle les deux véhicules 10 et 101 roulent dans le même sens sur la route 100, le véhicule 101 précédant le véhicule 10. Les feux de signalisation qui sont disposés à l'arrière du véhicule 101, notamment ses feux de freinage couramment appelés feux-stop, produisent un faisceau lumineux 104. Ce faisceau 104 contient des rayons lumineux qui parviennent jusqu'aux yeux du conducteur 10 après réflexion sur la surface de la route 100, mais aussi des rayons lumineux qui parviennent directement jusqu'à ses yeux. Les références R1 et R2 désignent respectivement ces deux types de rayons lumineux. Si la lumière qui est produite par les feux de signalisation arrière du véhicule 101 est polarisée naturellement ou horizontalement, le conducteur du véhicule 10 perçoit cette lumière de la façon suivante :
- pour le premier mode de réalisation (Figure 3) : le conducteur du véhicule 10 ne perçoit que la lumière directe (rayon R2) à travers la zone supérieure 12 du pare-brise 1, sans voir la flaque lumineuse 105 ;
- pour le second mode de réalisation (Figures 4a et 4b) : le conducteur du véhicule 10 voit la flaque lumineuse 105 à travers la zone inférieure 11 du pare-brise 1 (rayon R1), et ne perçoit la lumière directe à travers la zone supérieure 12 que si le faisceau 104 est produit avec une polarisation naturelle.

Bien que les deux modes de réalisation de l'invention aient été décrits pour le cas d'un élément de vision formant pare-brise, en référence aux Figures 2, 3 et 4a, 4b, l'Homme du métier comprend que l'invention s'applique identiquement à un rétroviseur, intérieur ou extérieur, du véhicule 10. Les descriptions détaillées de modes de réalisation qui ont été fournies ci-dessus peuvent alors être transposées sans difficulté à des situations où le véhicule 101 suit le véhicule 10 sur la route 100.

Enfin, il est entendu que l'invention peut être adaptée ou modifiée dans des détails de réalisation par rapport aux descriptions précédentes, tout en conservant au moins partiellement certains des avantages qui ont été cités. En particulier :
- chaque structure polarisante qui est utilisée peut avoir une constitution qui est différente d'un simple film polariseur linéairement ; et
- l'efficacité de chaque structure polarisante peut n'être que partielle, par rapport à la suppression du rayonnement dont la direction de polarisation linéaire à l'extérieur du véhicule est perpendiculaire à la direction de polarisation de la structure polarisante elle-même. Autrement dit, l'intensité du rayonnement qui est polarisé perpendiculairement à la direction de polarisation de la structure polarisante, peut être seulement réduite, sans être annulée complètement. L'élément de vision filtrant est alors encore conforme à l'invention.

## Revendications

1. Elément de vision filtrant (1) formant pare-brise ou rétroviseur pour un véhicule routier (10) sur lequel l'élément est monté, et adapté dans une partie au moins d'une surface de vision de l'élément, appelée partie filtrante, pour transmettre ou réfléchir vers un conducteur du véhicule un rayonnement qui possède à l'extérieur du véhicule, avant d'atteindre la surface de vision, une polarisation linéaire parallèle à une direction de filtrage fixe par rapport au véhicule, avec une atténuation inférieure en comparaison avec un autre rayonnement qui possède à l'extérieur du véhicule une polarisation linéaire contenue dans un plan perpendiculaire à la direction de filtrage,
la surface de vision comprenant une zone inférieure (11) et une zone supérieure (12) qui est située plus haut que la zone inférieure par rapport au véhicule et à une position de montage de l'élément de vision filtrant dans ledit véhicule, ladite partie filtrante correspondant soit à la zone inférieure soit à la zone supérieure,
et l'autre parmi la zone inférieure et la zone supérieure, qui ne correspond pas à ladite partie filtrante, étant adaptée pour transmettre ou réfléchir vers le conducteur les deux rayonnements qui ont à l'extérieur du véhicule les polarisations linéaires respectivement parallèle à la direction de filtrage et contenue dans le plan perpendiculaire à ladite direction de filtrage, de sorte qu'une différence d'atténuation entre les dites polarisations linéaires ait des valeurs distinctes dans les zones inférieure et supérieure,
dans lequel la zone inférieure (11) de la surface de vision est adaptée pour transmettre ou réfléchir vers le conducteur un rayonnement qui possède à l'extérieur du véhicule (10), avant d'atteindre la surface de vision, une polarisation linéaire horizontale avec une atténuation supérieure en comparaison avec un rayonnement qui possède à l'extérieur du véhicule une polarisation linéaire contenue dans un plan vertical, par rapport au véhicule et à la position de montage de l'élément de vision filtrant dans ledit véhicule,
l'élément de vision filtrant (1) étant **caractérisé en ce que** la zone supérieure (12) de la surface de vision est adaptée pour transmettre ou réfléchir vers le conducteur le rayonnement qui possède à l'extérieur du véhicule (10), avant d'atteindre la surface de vision, la polarisation linéaire horizontale avec une atténuation inférieure en comparaison avec le rayonnement qui possède à l'extérieur du véhicule la polarisation linéaire contenue dans le plan vertical.

2. Elément de vision filtrant (1) formant pare-brise ou rétroviseur pour un véhicule routier (10) sur lequel l'élément est monté, et adapté dans une partie au moins d'une surface de vision de l'élément, appelée partie filtrante, pour transmettre ou réfléchir vers un conducteur du véhicule un rayonnement qui possède à l'extérieur du véhicule, avant d'atteindre la surface de vision, une polarisation linéaire parallèle à une direction de filtrage fixe par rapport au véhicule, avec une atténuation inférieure en comparaison avec un autre rayonnement qui possède à l'extérieur du véhicule une polarisation linéaire contenue dans un plan perpendiculaire à la direction de filtrage,
la surface de vision comprenant une zone inférieure (11) et une zone supérieure (12) qui est située plus haut que la zone inférieure par rapport au véhicule et à une position de montage de l'élément de vision filtrant dans ledit véhicule, ladite partie filtrante correspondant soit à la zone inférieure soit à la zone supérieure,
et l'autre parmi la zone inférieure et la zone supérieure, qui ne correspond pas à ladite partie filtrante, étant adaptée pour transmettre ou réfléchir vers le conducteur les deux rayonnements qui ont à l'extérieur du véhicule les polarisations linéaires respectivement parallèle à la direction de filtrage et contenue dans le plan perpendiculaire à ladite direction de filtrage, de sorte qu'une différence d'atténuation entre les dites polarisations linéaires ait des valeurs distinctes dans les zones inférieure et supérieure,
dans lequel la zone supérieure (12) de ladite surface de vision est adaptée pour transmettre ou réfléchir vers le conducteur le rayonnement qui possède à l'extérieur du véhicule (10), avant d'atteindre la surface de vision, la polarisation linéaire horizontale avec une atténuation supérieure en comparaison avec le rayonnement qui possède à l'extérieur du véhicule la polarisation linéaire contenue dans le plan vertical,
l'élément de vision filtrant (1) étant **caractérisé en ce que** la zone inférieure (11) de la surface de vision est adaptée pour transmettre ou réfléchir vers le conducteur un rayonnement qui possède à l'extérieur du véhicule (10), avant d'atteindre la surface de vision, une polarisation linéaire horizontale avec une atténuation inférieure en comparaison avec un rayonnement qui possède à l'extérieur du véhicule une polarisation linéaire contenue dans un plan vertical, par rapport au véhicule et à la position de montage de l'élément de vision filtrant dans ledit véhicule.

3. Elément de vision filtrant selon la revendication 1 ou 2, comprenant au moins un polariseur linéaire efficace dans l'une des zones inférieure (11) ou supérieure (12) de la surface de vision pour produire la valeur de la différence d'atténuation entre les polarisations linéaires pour ladite zone inférieure ou supérieure.

4. Elément de vision filtrant selon l'une quelconque des revendications précédentes, dans lequel une limite (13) entre les zones inférieure (11) et supérieure (12) de la surface de vision ou une zone intermédiaire entre lesdites zones inférieure et supérieure, est située entre un dixième et une moitié d'une dimension de ladite surface de vision dans un plan vertical par rapport au véhicule et à la position de montage de l'élément de vision filtrant (1) dans ledit véhicule (10), le dixième et la moitié de la dimension étant comptés à partir d'un bord inférieur de la surface de vision.

5. Procédé pour améliorer une vision d'un conducteur d'un véhicule routier (10), suivant lequel le véhicule est équipé d'un élément de vision filtrant (1) conforme à l'une quelconque des revendications précédentes.

6. Procédé selon la revendication 5, suivant lequel l'élément de vision filtrant (1) est ajusté en hauteur ou en inclinaison, par rapport au véhicule (10) et à la position de montage de l'élément de vision filtrant dans ledit véhicule, de sorte qu'une limite (13) entre les zones inférieure (11) et supérieure (12) de la surface de vision ou une zone intermédiaire entre lesdites zones inférieure et supérieure, soit superposée en hauteur angulaire pour la vision du conducteur, à un niveau apparent d'un contact entre une chaussée (100) sur laquelle est située le véhicule, et des roues d'un véhicule externe (101) aussi situé sur la chaussée mais en avant ou en arrière du véhicule, avec un écart (a) de hauteur angulaire inférieur ou égal à 10° en valeur absolue, lorsque ledit véhicule et ledit véhicule externe sont distants entre eux de 40 m.

7. Procédé selon la revendication 5 ou 6, suivant lequel des véhicules externes (101) au véhicule dans lequel est monté l'élément de vision filtrant (1), sont équipés d'ensembles respectifs d'éclairage et de signalisation lumineuse produisant une lumière soit avec une polarisation linéaire contenue dans un plan vertical lorsque ledit véhicule externe est un véhicule à plus de deux roues, soit avec une polarisation linéaire horizontale ou naturelle lorsque ledit véhicule externe est un véhicule à deux roues.

## Patentansprüche

1. Filterndes Sichtelement (1), das eine Windschutzscheibe oder einen Rückspiegel für ein Straßenfahrzeug (10) bildet, an dem das Element montiert ist, und das mindestens in einem Teil einer Sichtfläche des Elements, der als filternder Teil bezeichnet wird, eingerichtet ist, um eine Strahlung zu einem Fahrer des Fahrzeugs durchzulassen oder zu reflektieren, die außerhalb des Fahrzeugs, bevor sie die Sichtfläche erreicht, eine lineare Polarisation besitzt, die parallel zu einer Filterrichtung ist, die in Bezug auf das Fahrzeug feststehend ist, mit einer geringeren Dämpfung verglichen mit einer anderen Strahlung, die außerhalb des Fahrzeugs eine lineare Polarisation besitzt, die in einer zu der Filterrichtung senkrechten Ebene enthalten ist,
wobei die Sichtfläche einen unteren Bereich (11) und einen oberen Bereich (12) aufweist, der in Bezug auf das Fahrzeug und auf eine Montageposition des filternden Sichtelements in dem Fahrzeug höher als der untere Bereich liegt, wobei der filternde Teil entweder dem unteren Bereich oder dem oberen Bereich entspricht,
und wobei der andere des unteren Bereichs und des oberen Bereichs, der dem filternden Teil nicht entspricht, eingerichtet ist, die beiden Strahlungen zu dem Fahrer des Fahrzeugs durchzulassen oder zu reflektieren, die außerhalb des Fahrzeugs die linearen Polarisationen aufweisen, die jeweils parallel zu der Filterrichtung und in der zu der Filterrichtung senkrechten Ebene enthalten sind, sodass ein Dämpfungsdifferenz zwischen den linearen Polarisationen in dem unteren und oberen Bereich verschiedene Werte aufweist,
wobei der untere Bereich (11) der Sichtfläche eingerichtet ist, um eine Strahlung zu dem Fahrer durchzulassen oder zu reflektieren, die außerhalb des Fahrzeugs (10), bevor sie die Sichtfläche erreicht, eine lineare horizontale Polarisation besitzt, mit einer höheren Dämpfung verglichen mit einer anderen Strahlung, die außerhalb des Fahrzeugs eine durchgehende lineare Polarisation besitzt, in einer vertikalen Ebene in Bezug auf das Fahrzeug und auf die Montageposition des filternden Sichtelements in dem Fahrzeug,
wobei das filternde Sichtelement (1) **dadurch gekennzeichnet ist, dass** der obere Bereich (12) der Sichtfläche eingerichtet ist, um die Strahlung zu dem Fahrer durchzulassen oder zu reflektieren, die außerhalb des Fahrzeugs (10), bevor sie die Sichtfläche erreicht, die lineare horizontale Polarisation besitzt, mit einer geringeren Dämpfung verglichen mit der Strahlung, die außerhalb des Fahrzeugs die lineare Polarisation besitzt, die in der vertikalen Ebene enthalten ist.

2. Filterndes Sichtelement (1), das eine Windschutzscheibe oder einen Rückspiegel für ein Straßenfahrzeug (10) bildet, an dem das Element montiert ist, und das mindestens in einem Teil einer Sichtfläche des Elements, der als filternder Teil bezeichnet wird, eingerichtet ist, um eine Strahlung zu einem Fahrer des Fahrzeugs durchzulassen oder zu reflektieren, die außerhalb des Fahrzeugs, bevor sie die Sichtfläche erreicht, eine lineare Polarisation besitzt, die parallel zu einer Filterrichtung ist, die in Bezug auf das Fahrzeug feststehend ist, mit einer geringeren Dämpfung verglichen mit einer anderen Strahlung, die außerhalb des Fahrzeugs eine lineare Polarisation besitzt, die in einer zu der Filterrichtung senkrechten Ebene enthalten ist,
wobei die Sichtfläche einen unteren Bereich (11) und einen oberen Bereich (12) aufweist, der in Bezug auf das Fahrzeug und auf eine Montageposition des filternden Sichtelements in dem Fahrzeug höher als der untere Bereich liegt, wobei der filternde Teil entweder dem unteren Bereich oder dem oberen Bereich entspricht,
und wobei der andere des unteren Bereichs und des oberen Bereichs, der dem filternden Teil nicht entspricht, eingerichtet ist, um die beiden Strahlungen zu dem Fahrer durchzulassen oder zu reflektieren, die außerhalb des Fahrzeugs die linearen Polarisationen aufweisen, die jeweils parallel zu der Filterrichtung und in der zu der Filterrichtung senkrechten Ebene enthalten sind, sodass ein Dämpfungsdifferenz zwischen den linearen Polarisationen in dem unteren und oberen Bereich verschiedene Werte aufweist,
wobei der obere Bereich (12) der Sichtfläche eingerichtet ist, um die Strahlung zu dem Fahrer durchzulassen oder zu reflektieren, die außerhalb des Fahrzeugs (10), bevor sie die Sichtfläche erreicht, die lineare horizontale Polarisation besitzt, mit einer höheren Dämpfung verglichen mit der Strahlung, die außerhalb des Fahrzeugs die lineare Polarisation besitzt, die in der vertikalen Ebene enthalten ist,
wobei das filternde Sichtelement (1) **dadurch gekennzeichnet ist, dass** der untere Bereich (11) der Sichtfläche eingerichtet ist, um eine Strahlung zu dem Fahrer durchzulassen oder zu reflektieren, die außerhalb des Fahrzeugs (10), bevor sie die Sichtfläche erreicht, eine lineare horizontale Polarisation besitzt, mit einer geringeren Dämpfung verglichen mit einer Strahlung, die außerhalb des Fahrzeugs eine lineare Polarisation besitzt, die in einer Ebene enthalten ist, die in Bezug auf das Fahrzeug und auf die Montageposition des filternden Sichtelements in dem Fahrzeug vertikal ist, .

3. Filterndes Sichtelement nach Anspruch 1 oder 2, umfassend mindestens einen Linearpolarisator, der in einem, dem unteren (11) oder oberen (12) Bereich der Sichtfläche wirksam ist, zum Erzeugen des Werts der Dämpfungsdifferenz zwischen den linearen Polarisationen für den unteren oder oberen Bereich.

4. Filterndes Sichtelement nach einem der vorhergehenden Ansprüche, wobei eine Grenze (13) zwischen dem unteren (11) und dem oberen (12) Bereich der Sichtfläche oder ein Zwischenbereich zwischen dem unteren und oberen Bereich zwischen einem Zehntel und einer Hälfte einer Abmessung der Sichtfläche liegt, in einer Ebene, die in Bezug auf das Fahrzeug und auf die Montageposition des filternden Sichtelements (1) in dem Fahrzeug (10) vertikal ist, wobei das Zehntel und die Hälfte der Abmessung ab einem unteren Rand der Sichtfläche gezählt werden.

5. Verfahren zum Verbessern einer Sicht eines Fahrers eines Straßenfahrzeugs (10), wonach das Fahrzeug mit einem filternden Sichtelement (1) nach einem der vorhergehenden Ansprüche ausgestattet ist.

6. Verfahren nach Anspruch 5, wonach das filternde Sichtelement (1) in der Höhe oder Neigung in Bezug auf das Fahrzeug (10) und auf die Montageposition des filternden Sichtelements in dem Fahrzeug derart verstellt wird, dass eine Grenze (13) zwischen dem unteren (11) und dem oberen (12) Bereich der Sichtfläche oder ein Zwischenbereich zwischen dem unteren und oberen Bereich wird in der Winkelhöhe für die Sicht des Fahrers, auf einem scheinbaren Kontaktniveau zwischen einer Fahrbahn (100), auf der sich das Fahrzeug befindet, und den Rädern eines externen Fahrzeugs (101), das sich ebenfalls auf der Fahrbahn befindet, jedoch vor oder hinter dem Fahrzeug, überlagert mit einer Abweichung (a) der Winkelhöhe, deren absoluter Wert kleiner oder gleich 10° ist, wenn das Fahrzeug und das externe Fahrzeug 40 m voneinander entfernt sind.

7. Verfahren nach Anspruch 5 oder 6, wonach die externen Fahrzeuge (101) zum Fahrzeug, in dem das filternde Sichtelement (1) montiert ist, mit jeweiligen Beleuchtungs- und Lichtsignalsätzen ausgestattet sind, die ein Licht entweder mit einer linearen Polarisation erzeugen, die in einer vertikalen Ebene enthalten ist, wenn das externe Fahrzeug ein Fahrzeug mit mehr als zwei Rädern ist, oder mit einer linearen horizontalen oder natürlichen Polarisation erzeugen, wenn das externe Fahrzeug ein Fahrzeug mit zwei Rädern ist.

## Claims

1. Filtering vision element (1) forming a windshield or rearview mirror for a road vehicle (10) on which the element is mounted, and adapted in at least a portion of a vision surface of the element, called filtering portion, to transmit or reflect towards a vehicle's driver a radiation which has, outside the vehicle and before reaching the vision surface, a linear polarization parallel to a filtering direction which is fixed relative to the vehicle, with a lower attenuation in comparison to another radiation which has, outside the vehicle, a linear polarization contained in a plane perpendicular to the filtering direction,
the vision surface comprising a lower region (11) and an upper region (12) which is located higher than the lower region relative to the vehicle and to a mounting position of the filtering vision element in said vehicle, said filtering portion corresponding either to the lower region or to the upper region,
and the other one among the lower region and upper region, which does not correspond to said filtering portion, being adapted to transmit or reflect towards the driver both radiations which have, outside the vehicle, the linear polarizations respectively parallel to the filtering direction and contained in the plane perpendicular to said filtering direction, so that a difference in attenuation between said linear polarizations has distinct values in the lower and upper regions,
wherein the lower region (11) of the vision surface is adapted to transmit or reflect towards the driver a radiation which has, outside the vehicle (10) and before reaching the vision surface, a horizontal linear polarization with greater attenuation in comparison to a radiation which has, outside the vehicle, a linear polarization contained in a vertical plane relative to the vehicle and to the mounting position of the filtering vision element in said vehicle,
the filtering vision element (1) being **characterized in that** the upper region (12) of the vision surface is adapted to transmit or reflect towards the driver the radiation which has, outside the vehicle (10) and before reaching the vision surface, the horizontal linear polarization with less attenuation in comparison to the radiation which has, outside the vehicle, the linear polarization contained in the vertical plane.

2. Filtering vision element (1) forming a windshield or rearview mirror for a road vehicle (10) on which the element is mounted, and adapted in at least a portion of a vision surface of the element, called the filtering portion, to transmit or reflect towards a vehicle's driver a radiation which has, outside the vehicle and before reaching the vision surface, a linear polarization parallel to a filtering direction which is fixed relative to the vehicle, with a lower attenuation in comparison to another radiation which has, outside the vehicle, a linear polarization contained in a plane perpendicular to the filtering direction,
the vision surface comprising a lower region (11) and an upper region (12) which is located higher than the lower region relative to the vehicle and to a mounting position of the filtering vision element in said vehicle, said filtering portion corresponding either to the lower region or to the upper region,
and the other one among the lower region and upper region, which does not correspond to said filtering portion, being adapted to transmit or reflect towards the driver both radiations which have, outside the vehicle, the linear polarizations respectively parallel to the filtering direction and contained in the plane perpendicular to said filtering direction, so that a difference in attenuation between said linear polarizations has distinct values in the lower and upper regions,
wherein the upper region (12) of said vision surface is adapted to transmit or reflect towards the driver the radiation which has, outside the vehicle (10) and before reaching the vision surface, the horizontal linear polarization with greater attenuation in comparison to the radiation which has, outside the vehicle, the linear polarization contained in the vertical plane,
the filtering vision element (1) being **characterized in that** the lower region (11) of the vision surface is adapted to transmit or reflect towards the driver a radiation which has, outside the vehicle (10) and before reaching the vision surface, a horizontal linear polarization with less attenuation in comparison to a radiation which has, outside the vehicle, a linear polarization contained in a vertical plane, relative to the vehicle and to the mounting position of the filtering vision element in said vehicle.

3. Filtering vision element according to claim 1 or 2, comprising at least one linear polarizer that is efficient in one among the lower (11) and upper (12) regions of the vision surface, for producing the value of the difference in attenuation between the linear polarizations for said lower or upper region.

4. Filtering vision element according to any one of the preceding claims, wherein a boundary (13) between the lower (11) and upper (12) regions of the vision surface, or an intermediate region between said upper and lower regions, is positioned between one-tenth and one-half of a dimension of said vision surface in a vertical plane relative to the vehicle and to the mounting position of the filtering vision element (1) in said vehicle (10), the one-tenth and one-half of the dimension being measured from a lower edge of the vision surface.

5. Method for improving vision for a driver of a road vehicle (10), wherein the vehicle is equipped with a filtering vision element (1) according to any one of the preceding claims.

6. Method according to claim 5, wherein a height or tilt of the filtering vision element (1) is adjusted, relative to the vehicle (10) and to the mounting position of the filtering vision element in said vehicle, so that a boundary (13) between the lower (11) and upper (12) regions of the vision surface or an intermediate region between said lower and upper regions is superimposed in angle of elevation, for the driver's vision, on an apparent level of contact between a pavement (100) on which is the vehicle is located and wheels of an external vehicle (101) also located on the pavement but in front of or behind the vehicle, with a difference (a) in angle of elevation that is less than or equal to 10° in absolute value, when said vehicle and said external vehicle are 40 m apart from each other.

7. Method according to claim 5 or 6, wherein vehicles (101), external to the vehicle in which the filtering vision member (1) is mounted, are equipped with respective lighting and signalling light assemblies that produce light either with linear polarization contained in a vertical plane when said external vehicle is a vehicle with more than two wheels, or with horizontal or natural linear polarization when said external vehicle is a vehicle with two wheels.
